# EUROPEAN PATENT SPECIFICATION

(11) **EP 3 116 807 B1**
(45) Date of publication and mention of the grant of the patent: **07.03.2018**
(21) Application number: 15709351.9
(22) Date of filing: 11.03.2015
(51) Int. Cl.: B65D 90/00, B65D 88/12

(54) **DEVICE FOR SUPPORTING A REMOVABLE DOOR HEADER, METHOD AND USE THEREWITH**
VORRICHTUNG ZUR UNTERSTÜTZUNG EINES ENTFERNBAREN TÜRQUERTRÄGERS, VERFAHREN UND VERWENDUNG DAMIT
DISPOSITIF POUR SOUTENIR UN LINTEAU DE PORTE AMOVIBLE, PROCÉDÉ ET UTILISATION COMPRENANT UN TEL DISPOSITIF

(30) Priority: 11.03.2014 GB 201404263
(43) Date of publication of application: 18.01.2017
(73) Proprietor: Pilkington Group Limited, Nr. Ormskirk, Lancashire L40 5UF (GB)
(72) Inventor: HOPKINS, Andy, Ormskirk Lancashire L40 5UF (GB); SAINT, Martin, Staffs ST15 8HQ (GB); ROSCOE, Ian, Ormskirk Lancashire L40 5UF (GB); WARD, Eric, Ormskirk Lancashire L40 5UF (GB)
(74) Representative: Stanley, Andrew Thomas
(86) International application number: PCT/GB2015/050709
(87) International publication number: WO 2015/136280

(56) References cited:
- AU-B3- 612 313
- GB-A- 2 144 103
- JP-A- S56 142 720

## Description

The present invention relates to a device that may be attached to a door of an open-top container to aid the removal and replacement of a removable door header from the open-top container.

There are a variety of shipping containers currently in use for transporting heavy loads. Examples of such containers are well known and are commercially available from many companies, for example Hapag-Lloyd AG of Ballindamm 25, 20095 Hamburg, Germany.

One type of shipping container is known as an open-top container because the top of the container is open and may be covered with a removable tarpaulin. Open-top containers generally have a removable door header (also known in the art as a "container lintel") to provide additional rigidity to the container during transport.

The ends of the removable door header usually sit on upper portions of the container walls that form the container door opening. The removable door header is secured to the upper portions of the walls with pins to ensure door header remains in place during transit.

To remove the door header one of the pins is removed and the door header swung outwards. With the door header in the swung-out position it is easier to load and unload the open-top container. When the door header is in the swung-out position, essentially all of the weight of the door header is transferred to the pivot pin.

One problem with such removable door headers is that it is possible for one of the pins about which the door header rotates to become bent, with the possibility of the pin failing. The result is that the door header, which is typically over 25kg, may fall from height and cause serious injury.

Another problem is that one of the securing pins may become damaged in transit. Whilst the door header may still able to remain in position during transit, if a securing pin fails this causes a problem when removing the door header. It is possible for the door header to fall from the upper portions of the container wall because the pin that should be present to act as a pivot about which the door header can rotate has failed.

It is also possible that one of the securing pins may not have been inserted prior to transit. If a securing pin is missing and this goes unnoticed, the door header may fall from height due to the absence of a securing pin about which the door header is meant to rotate.

Given that the door header is an elongate steel member and weighs many ten's of kg there is a risk of injury if the door header falls from height.

A container having a removable door header is known from JPS56142720, wherein the upper edge of one of the container doors may be used to support the removable door header as the door is opened. Such a container has a specific door design that has rocking bars configured to engage with claws on a specific design of removable door header. As such, a container that does not have such a design of door and/or removable door header is unable to operate in such a manner.

Another type of cargo container is described in GB2315739A.

In AU612313B3 a loading support for supporting an individual on the outside of a wall of a container is described.

There exists a need for an apparatus that allows the door header of an open-top container to be removed (and replaced) safely. The ability to use such apparatus with existing open-top containers without having to specifically modify the container design is also desirable.

Accordingly the present invention provides from a first aspect a device for supporting a removable door header, the removable door header being part of a container, the device comprising attachment means for attaching the device to a door of the container and support means for supporting the removable door header when the device is attached to the door.

A device according to the present invention attaches to one of the doors of the container thereby reducing the need to use any other equipment.

Preferably the attachment means is configured to slot onto the door. Preferably the attachment means slots onto the upper edge of the door.

Preferably the support means is perpendicular to the attachment means.

Preferably the support means is configured to extend beyond the external perimeter of the door.

Preferably the attachment means comprises at least one pair of spaced apart walls (a first wall and a second wall), the first wall configured to face an inner facing surface of the door and the second wall configured to face an outer facing surface of the door. Preferably the first wall is connected to the second wall by an upper member. Preferably the first wall, the second wall and the upper member are configured to have a U-shape for attaching to the door. Preferably the first wall and the upper member are part of a sheet of bent metal. Preferably the second wall and the upper member are part of a sheet of bent metal. Preferably the first wall, the second wall and the upper member are part of a sheet of bent metal.

Preferably the first wall, the second wall and the upper member are separate components that have been connected together.

In some embodiments preferably the device further comprises securing means for securing the removable door header on or against the support means.

Preferably the securing means comprises one or more straps. Preferably the securing means is mounted on the support means.

Preferably the securing means comprises one or more elastically deformable means in mechanical communication at one end with the support means and at the other end with abutment means for securing the removable door header on or against the support means. Preferably the elastically deformable means comprises at least one spring. Preferably the elastically deformable means comprises at least one band or elastic material such as rubber. Preferably the abutment means comprises at least one abutment surface.

In embodiments with securing means, preferably at least a portion of the securing means is mounted on the support means and/or the attachment means.

In some embodiments the device comprises securing means comprising one or more springs in mechanical communication at one end with the support means and at the other end with abutment means for biasing or securing the removable door header on the support means.

In some embodiments preferably the support means comprises a shelf. Preferably the shelf is extendible. Preferably the shelf comprises a slidable extension or a foldable extension for extending the length of the shelf.

In the present invention the support means comprises slot means for defining a slot into which the removable door header fits. Preferably the slot means comprises one or more elements extending upwards from the support means to define at least a portion of the slot. Preferably the slot is configured to prevent the door header from toppling over when the removable door header is located in the slot.

In a preferred embodiment the device is removably attachable to the door.

A device according to the present invention is particularly useful for removing the removable door header of an open-top container.

From a second aspect the present invention provides a method of removing a removable door header from a container, the method comprising the steps: attaching a device according to the first aspect of the present invention to a door of the container such that the support means is below the removable door header; removing a pin securing the removable door header to the container; and opening the door such that the removable door header is supported on the support means as the door opens.

Preferably the method includes the step of securing the removable door header on or to the support means before the door is opened.

Preferably both pins securing the removable door header to the container are removed. This is preferred when the pivot axis of the door and the pivot axis of the removable door header are not sufficiently aligned.

The present invention also provides from a third aspect use of a door of an open-top container and a device according to the first aspect of the invention for removing or replacing a removable door header from the open top container.

The invention will now be described with reference to the following figures (not to scale) in which,
Figure 1 is a schematic isometric representation of a conventional open-top container;
Figure 2 is a front view of the container shown in figure 1;
Figure 3 is a side view of the container shown in figure 1;
Figure 4 is a plan view of the container shown in figure 1;
Figure 5 is a more detailed front view of the container shown in figure 1;
Figure 6 is an isometric representation of a removable door header;
Figure 7 is a schematic representation of the container shown in figure 1 where the removable door header is a position used when transporting the container;
Figure 8 a schematic representation of the container shown in figure 1 where the removable door header has been swung to an open position for loading/unloading the container;
Figure 9 is a schematic isometric representation of a device according to a first embodiment;
Figure 10 is a plan view of the device shown in figure 9 with the addition of securing means;
Figure 11 is a schematic isometric representation of the device shown in figure 9 attached to the upper edge of a door of an open-top container;
Figure 12 is a schematic isometric representation of another device according to another embodiment;
Figure 13 is a plan view of the device shown in figure 12 with the addition of securing means;
Figure 14 is a side view of the device shown in figure 12 attached to an upper edge of a door of an open-top container;
Figure 15 is a side view of another the device of the type shown in figure 12 with the addition of slot means according to the first aspect of the present invention;
Figure 16 is a plan view of the device shown in figure 15 with the securing means in an open position;
Figure 17 is a schematic isometric representation of another device according to another embodiment;
Figure 18 is a schematic isometric representation of another device according to another embodiment;
Figure 19 is an exploded schematic isometric representation of the device shown in figure 18;
Figure 20 is a side view of the device shown in figure 18 in a first configuration attached to the upper edge of an open-top container door;
Figure 21 is a side view of the device shown in figure 18 in a second configuration attached to the upper edge of an open-top container door;
Figure 22 is a side view of the device shown in figure 18 in a first configuration attached to the upper edge of an open-top container door with a removable door header supported thereon;
Figure 23 is a side view of a portion of another device in accordance with the present invention shown in a first (parked) configuration;
Figure 24 is a side view of a portion of the device as shown in figure 23 in a second configuration;
Figure 25 is a side view of a portion of the device as shown in figure 23 in a third configuration;
Figure 26 is a side view of a portion of the device as shown in figure 23, where a removable door header is being supported and the device is moving back to the first configuration;
Figure 27 is a side view of the device as shown in figure 23, where a removable door header is being supported and the device is in the first configuration;
Figure 28 is a side view of a portion of another device as shown in figure 23, where a removable door header is being supported and the device is in a first configuration;
Figure 29 is a exploded portion of part of the device shown in figure 28; and
Figure 30 is the device shown in figure 28 where the device is in a second configuration.

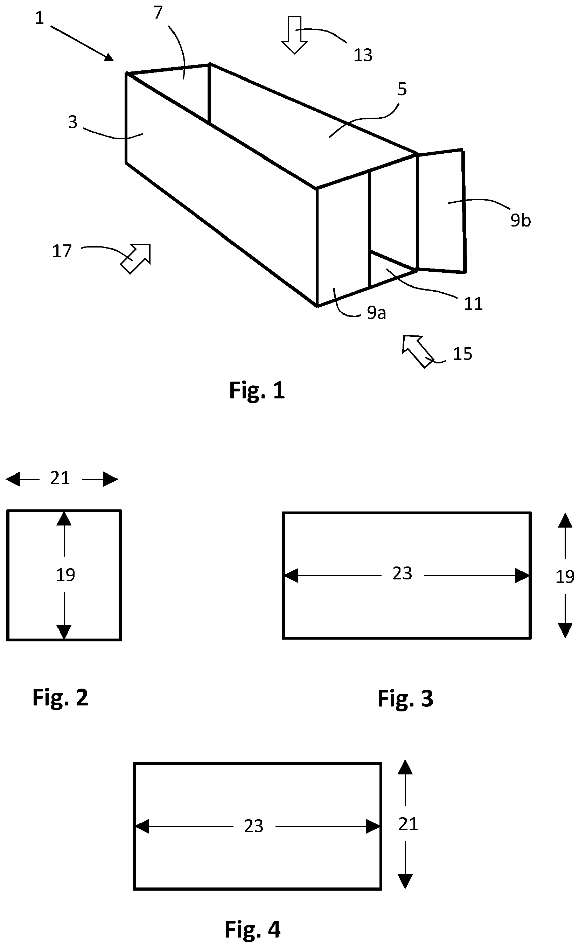

Figure 1 shows an isometric schematic representation of a conventional open-top container. The open-top container 1 comprises a first side wall 3, a second side wall 5, an end wall 7, a first door 9a (shown in a closed position), a second door 9b (shown in an open position) and a base 11. The walls are typically made of corrugated steel. The base usually has a wooden floor. The open-top container 1 may be loaded or unloaded through the open roof (i.e. in the direction of arrow 13) or through the open doors (i.e. in the direction of arrow 15). Typically the roof has removable bows and a removable tarpaulin.

Figure 2 shows a schematic front view of the open-top container 1 when viewed in the direction of arrow 15. The doors 9a, 9b are not shown for clarity. A typical open-top container has an internal height around 2.4m, as shown by arrow 19. Typically the internal width of an open-top container is around 2.4m, as shown by arrow 21.

Figure 3 shows a schematic side view of the open-top container 1 when viewed in the direction of arrow 17. A typical open-top container has an internal length of 5.9m, although the internal length may be 12m. The internal length is represented by arrow 23. Containers are typically available in twenty foot (20'), forty foot (40') and forty five foot (45') lengths.

Figure 4 shows a schematic plan view of the open-top container when viewed in the direction of arrow 13. The width 21 and length 23 are shown.

Depending upon the actual dimensions of the open-top container, the volume thereof is typically between 30m³ and 70m³ and has a maximum payload in excess of twenty eight tonnes (28,000 kg).

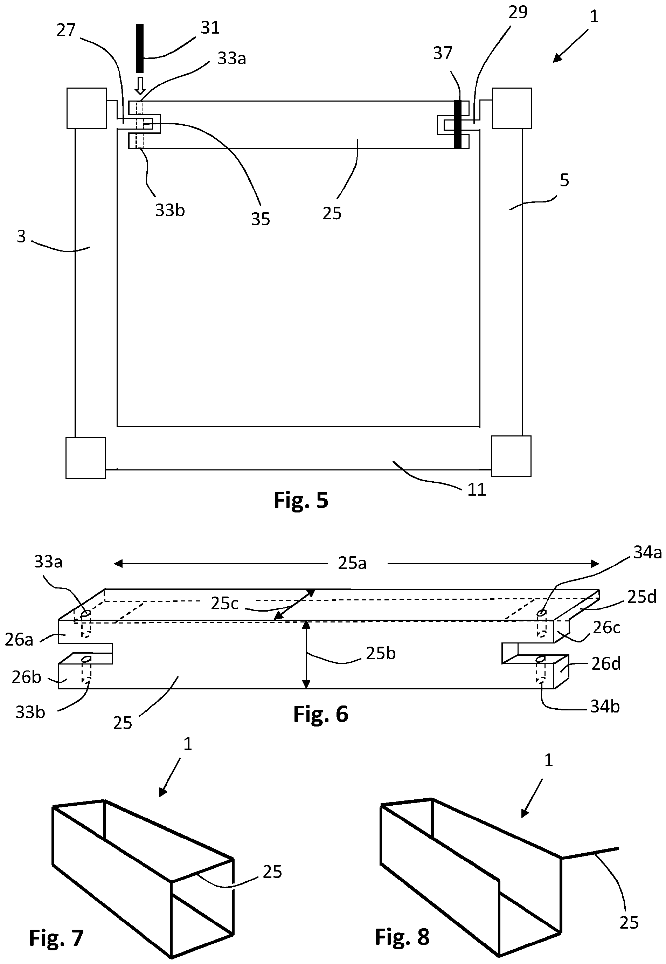

Figure 5 shows a more detailed schematic view of the open-top container 1 when viewed in the direction of arrow 15. Again the doors 9a, 9b are not shown for clarity. As is conventional in the art, the open-top container 1 has a removable door header 25. The removable door header 25 (often referred to as a container lintel) is supported on shoulder portions 27, 29 of respective side walls 3, 5. The removable door header 25 has two lug portions at either end, each lug portion having a hole therein. The lug portions are spaced such that a lug portion of the respective shoulder portion fits in the space, there being a hole in the lug portion of the shoulder portion. A pin may be located in the holes in the lug portions of the door header, the pin passing through the hole in the lug portion of the shoulder portion. Pin 31 is shown displaced and may be inserted into the hole 33a in the lug at the end of the removable door header 25, passing through hole 35 in the lug portion of the shoulder portion 27, and then passing through hole 33b in the other lug portion at the end of door header to engage therewith. The pin 37 is shown in the inserted position. During transit i.e. when the open-top container is transported between locations, each pin 31, 37 should be in the "inserted position", that is as shown for pin 37 in figure 5.

Figure 6 shows a more detailed view of the removable door header 25. The door header 25 is essentially an elongate member having a length 25a, a height 25b and a width 25c. At one end there are two lug portions 26a and 26b. The lug portion 26a has a hole 33a therein. The lug portion 26b has a hole 33b therein. The holes 33a, 33b align with the hole 35 in the lug portion of the shoulder portion 27. The holes 33a, 33b are for the securing pin 31. At the other end there are two lug portions 26c and 26d. The lug portion 26c has a hole 34a therein. The lug portion 26d has a hole 34b therein. The holes 34a, 34b align with the hole in the lug portion of the shoulder portion 29. The holes 34a, 34b are for the securing pin 37. The removable door header 25 is made of steel and weighs 50kg.The removable door header 25 has a ledge portion 25d that helps form a cover portion for the upper part of the container. As such when positioned on the floor in the orientation as shown in figure 6, the removable door header has a tendency to topple over i.e. the ledge portion 25d tends to fall downwards.

Figure 7 shows a schematic representation of the open-top container 1 with the removable door header 25 in position for transit.

With reference to figures 5, 6, 7 and 8 the removable the door header 25 is removed from the open-top container as follows. One of the pins 31, 37 is removed (typically manually), leaving the other in place. The removable door header 25 may then be swung outwards, as shown in figure 8. The removable door header 25 swings about the pin that is in the inserted position and this pin acts as a pivot i.e. by removing pin 31, pin 37 is the pivot and vice versa. The door header 25 is typically swung outwards using manual intervention.

A problem when removing the removable door header is that one of the pins 31,37 may break when the door header is swung out i.e. in the position shown in figure 8. If the pin breaks the door header may fall with a risk of injury to persons.

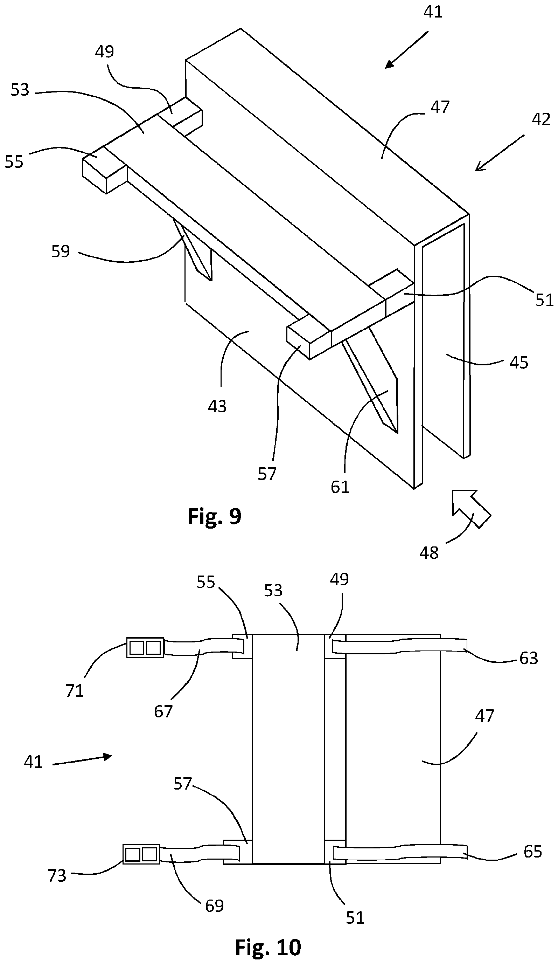

Figure 9 shows a device according to a first embodiment. The device 41 is configured to attach to a door of an open-top container. The device 41 has attachment means 42 comprising a first wall 43, a second wall 45. Each wall 43, 45 has a rectangular outline. The first wall 43 is connected to the second wall 45 by an upper member 47. The upper member 47 also has a rectangular outline. When viewed in the direction of arrow 48 the attachment means 42 has a "U" shaped configuration. The first wall 43, second wall 45 and upper portion 47 may be part of a bent sheet of metal. Alternatively the first and second walls may be sheets joined to upper member 47 which may also be a sheet. Suitable sheet materials are steel and they may be joined by welding. It is possible that the first and/or second walls have a different thickness to thickness of the upper member 47. Typically the first wall 43 is parallel to the second wall 45. Typically the upper member 47 is connected to the first and second walls 43, 45 such that the upper member 47 is perpendicular to the first and second walls 43, 45.

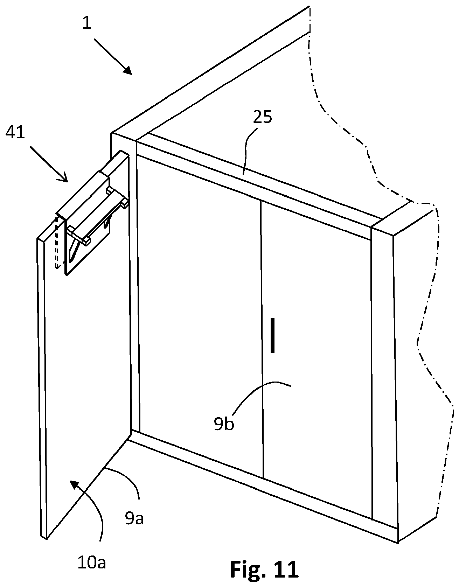

The spacing of the first and second walls 43, 45 is sufficient that the device may slot onto the upper edge of a door of the open-top container, as shown in Figure 11.

Connected to the first wall 43 is a shelf 53. The shelf has a first lateral edge facing the first wall 43 and a second opposing lateral edge. The shelf is connected along the first lateral edge to the first wall 43 by a first mount 49 and a second mount 51. The shelf 53 and first and second mounts 49, 51 are each made of steel. The first and second mounts 49, 51 are welded to the first wall 43. The shelf 53 is welded to the first and second mounts 49, 51.

Along the second lateral edge of the shelf are a third mount 55 and a fourth mount 57. The third and fourth mounts 55, 57 are also made of steel and are welded to the second lateral edge of the shelf. The mounts 49, 55 are aligned and the mounts 51, 57, as will be further explained with reference to figure 10. The underside of the shelf 53 is connected to the first wall 43 by a first support 59 and a second support 61. The first and second supports 59, 61 increase the rigidity of the device and ensure the shelf 53 is able to support the removable door header.

Figure 10 shows a plan view of the device 41. This figure shows the dual purpose of the mounts 49, 51, 55, 57. Secured to mount 49 is one end of a nylon strap 63. Secured to mount 51 is one end of a nylon strap 65. Secured to mount 55 is one end of a nylon strap 67. At the free end of nylon strap 67 is a buckle 71. Secured to mount 57 is one end of a nylon strap 69. At the free end of nylon strap 69 is a buckle 73. The strap 63 is arranged to engage with buckle 71 and the strap 65 is arranged to engage with buckle 73. In the configuration shown in figure 10, the straps are unbuckled. For clarity the straps 63, 65, 67, 69 and buckles 71, 73 are not shown in figure 9.

Figure 11 shows an isometric perspective view of a portion of an open top-container 1 with the device 41 shown in figures 9 and 10 attached to the upper edge of the door 9a. The device attaches to the door such that with the door closed, the shelf faces the interior of the container. The door 9a has a major surface 10a that faces the interior of the container when the door 9a is closed. The door 9a has an exterior facing major surface 10a* (not indicated on this figure) opposite major surface 10a. The other door 9b is shown closed but would be opened to remove the door header 25. The open-top container 1 is of the type shown and described in relation to figures 1 to 8.

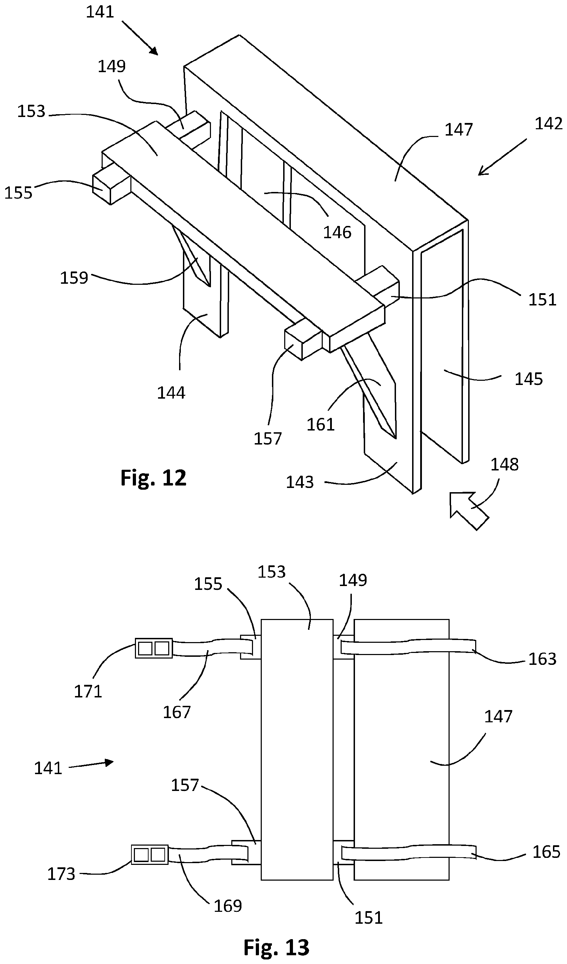

Figure 12 shows an isometric representation of another device 141 according to another embodiment. The device is similar to the device shown in figure 9 however the first wall is split into two coplanar wall portions 143 and 144. Likewise, the second wall is split into two coplanar wall portions 145 and 145. The upper ends of the wall portions 143, 144, 145 and 146 are connected to upper member 147.

The device has attachment means 142 that consists of the two coplanar wall portions 143, 144, the upper member 147 and the other two coplanar wall portions 145, 146.When viewed in the direction of arrow 148 the profile of the support means 142 is the same as the prolife of the support means 42 when viewed in the direction of arrow 48 (as shown in figure 10). This configuration weighs less than the configuration shown in figure 9 because the first and second walls are split as shown.

The wall portions 143, 144, 145 and 146 and the upper member 147 are substantially rectangular in outline. The two coplanar wall portions 143, 144 lie in a plane that is parallel to the plane in which the two coplanar wall portions 145, 146 lie. The upper member 147 is connected to the wall portions 143, 144, 145 and 146 such that the upper member 147 is substantially perpendicular to the wall portions 143, 144, 145 and 146.

Connected to wall portion 144 is first mount 149. Connected to wall portion 143 is second mount 151. A shelf 153 is connected along a first lateral edge thereof to mounts 149, 151 such that the shelf is connected to the wall portions 143, 144. The shelf has a second lateral edge opposite the first lateral edge, along which mounts 155 and 157 are connected. The mounts 149 and 155 are aligned in a direction perpendicular to the length of the shelf 153 i.e. across the width of the shelf 153. The mounts 151 and 157 are similarly aligned.

The underside of the shelf 153 is connected to the wall portion 144 by a first support 159 and to the wall portion 143 by a second support 161. The first and second supports 159, 161 increase the rigidity of the device and ensure the shelf 153 is able to support the removable door header.

The dual purpose of the mounts 149, 151, 155 and 157 are shown in figure 13. Figure 13 is a plan view of the device 141.

Secured to mount 149 is one end of a nylon strap 163. Secured to mount 151 is one end of a nylon strap 165. Secured to mount 155 is one end of a nylon strap 167. At the free end of nylon strap 167 is a buckle 171. Secured to mount 157 is one end of a nylon strap 169. At the free end of nylon strap 169 is a buckle 173. The strap 161 is arranged to engage with buckle 171 and the strap 165 is arranged to engage with buckle 173. In the configuration shown in figure 13, the straps are unbuckled. For clarity the straps 163, 165, 167, 169 and buckles 171, 173 are not shown in figure 12.

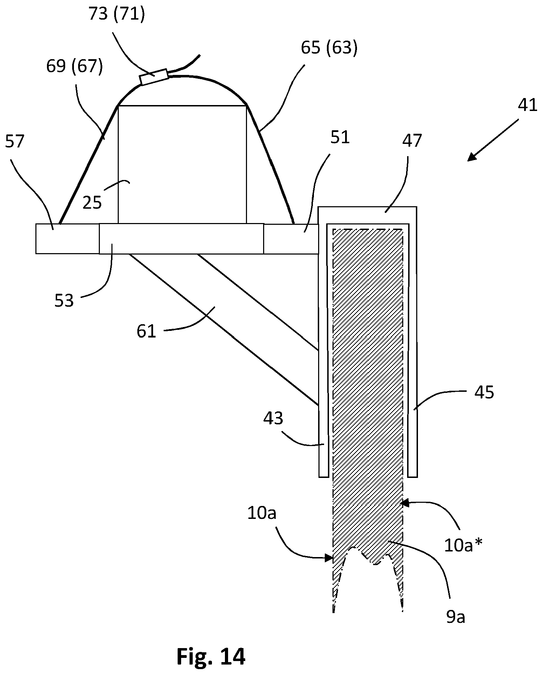

Figure 14 shows a view of the device 41 in the direction of arrow 48. This figure shows a removable door header 25 supported on the shelf 53. The device 41 is also shown attached to a door 9a of an open top container. A portion of the door 9a is shown in phantom.

The device 41 is attached to upper edge of the door by the U-shaped attachment means being placed over the top of the door, the attachment means consisting of the first wall 43 and second wall 45 connected to upper member 47. Reference is made to figure 11. The device is attached to the door 9a such that the shelf is on the same side as the interior facing major surface 10a. The major surface 10a* of door 9a faces the exterior of the container.

With reference to figure 10, figure 14 shows how the straps 65 engaged with buckle 73. The reference numeral in brackets refers to the other straps and buckles shown in figure 10. When the straps are buckled the removable door header is securely supported on the shelf 53. The straps secure the removable door header on the shelf to prevent the door header from moving vertically with respect to the shelf. The straps may be elasticated to allow slight vertical movement of the door header when secured to the shelf.

The straps can be unbuckled to allow the door header 25 to be moved off the shelf 53.

It will be readily apparent that figure 14 is also a view of the device 141 when viewed in the direction of arrow 148. In this case the reference numerals on figure 14 for the device 141 are the same as those for the device 41 except with the addition of a leading "1" i.e. shelf 153 of device 141 is equivalent to shelf 53 of device 41.

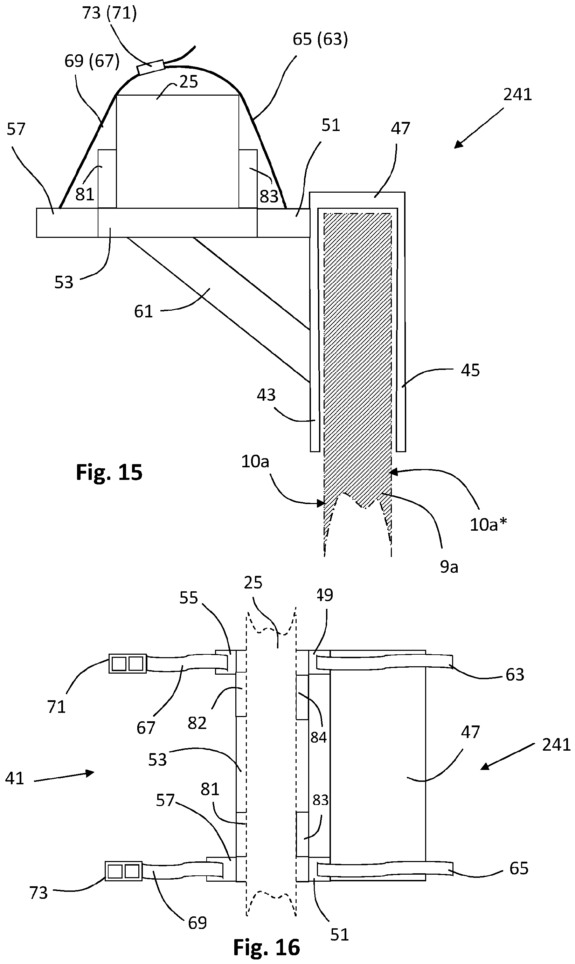

An alternative embodiment to that shown in figure 14 and in accordance with the present invention is shown in figure 15 and 16. On the upper surface of the shelf 53 are rectangular steel blocks 81, 82, 83 and 84. The steel blocks 81, 82 are each located near the lateral edge of the shelf and block 81 is collinear with block 82. Blocks 83, 84 are located near the other lateral edge of the shelf and block 83 is collinear with block 84.

The blocks 81, 82, 83, 84 define a slot into which the removable door header can fit i.e. the width of the removable door header can fit into the slot. The blocks 81, 82, 83, 84 are slot means for defining a slot into which the removable door header 25 fits, see figure 16. In figure 16 a portion of the removable door header 25 is shown (in dashed lines) where it can be seen that the removable door header extends beyond the edges of the shelf i.e. the shelf 53 is shorter than the removable door header 25.

Block 81 is opposite block 83 and block 82 is opposite block 84, thereby defining the slot. In this example the slot is made of two slots, one slot defined by the spacing of blocks 81 ad 83 and the other slot defined by the spacing of blocks 82, 84.

Using blocks that extend upwards from the shelf by a sufficient amount help stabilise the removable door header on the shelf. As shown with reference to figure 6, the removable door header may have a centre of gravity such that the door header has a tendency to topple over when located on the shelf.

The blocks 81, 82 may be replaced by a single block. The blocks 83, 84 may be replaced by a single block. There may be more than two blocks forming either side of the slot.

For clarity, the straps shown in the plan view figure 16 are not in the buckled configuration (as is shown in figure 15).

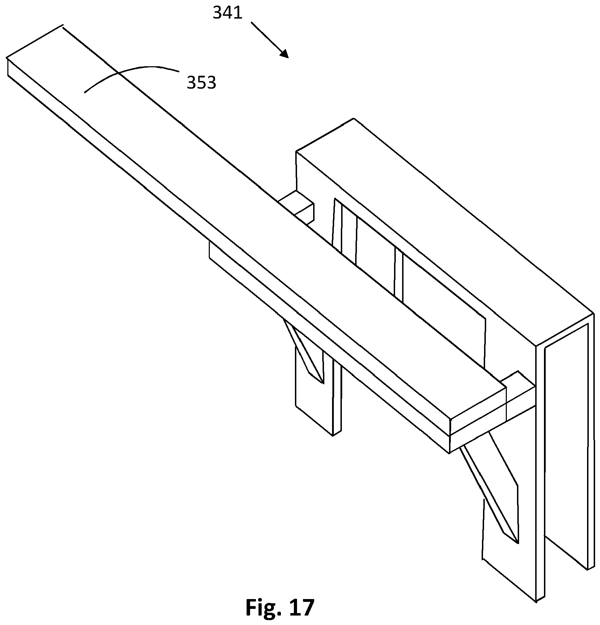

Figure 17 shows an isometric representation of another device 341 in accordance with another embodiment. The device 341 is essentially the same as the device 141 except the shelf 353 is longer than the shelf 153. When attached to a door of an open-top container, for example door 9a of figure 1, the shelf 353 extends into the opening of door 9b. By using a longer shelf 353 there is more support for the removable door header.

The shelf 353 may be an attachment for the device 141 i.e. the shelf 353 attaches to shelf 153. Alternatively the shelf 353 may be foldable or slidable to extend into the lengthened configuration.

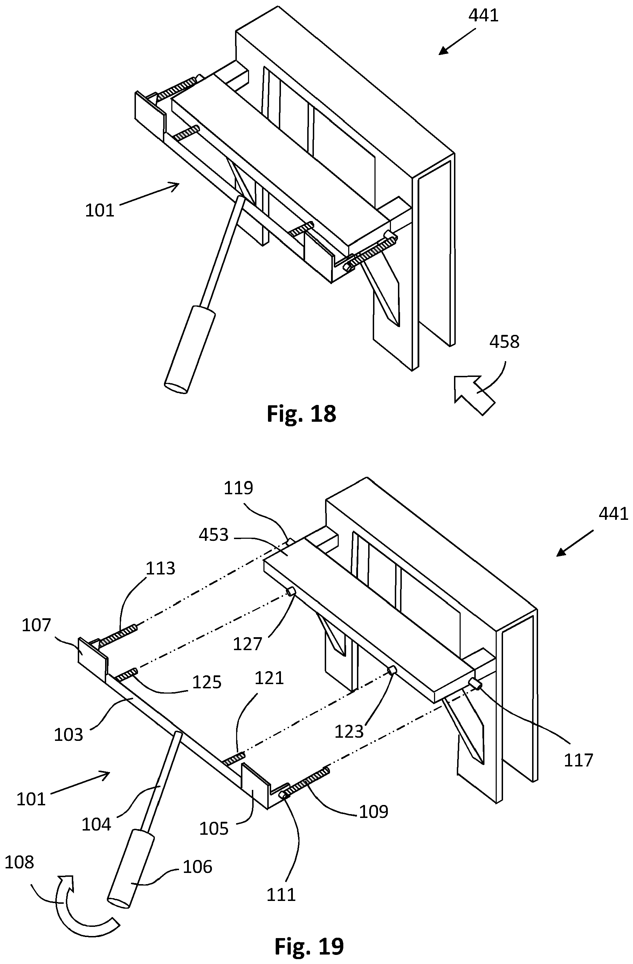

Figure 18 shows an isometric representation of another device 441 according to another embodiment. The device is similar to the device 141 shown in figure 12 except instead of straps there is a securing device 101 to secure the removable door header on the shelf portion 453 of the device 441. Figure 19 shows the device 441 with the securing device 101 offset for clarity.

The securing device 101 comprises an elongate rod 103. Mid-way along the length of the rod 103 is a handle 104 with grip 106. The handle is used to move the securing device in the direction of arrow 108 as will described in more detail hereinafter.

Attached to each end of the rod 103 are corner pieces 105, 107. Attached to corner piece 105 is a spring 109. One end of the spring 109 is coupled to the corner piece 105 by means of a suitable mounting 111. A spring 113 is attached to corner piece 107 by means of a similar mounting 115 (not shown).

The other end of spring 109 is coupled to the end of the shelf 453 by means of a suitable mounting 117. Similarly the other end of spring 113 is coupled to the opposite end of the shelf 453 by means of a suitable mounting 119. Spring 109 is in mechanical communication at one end with the corner piece 105 and at the other end with the shelf 453. Likewise, the spring 113 is in mechanical communication at one end with the corner piece 107 and at the other end with the shelf 453

Spaced from the spring 109 is another spring 121. The spring 121 is attached at one end to the rod 103, the spring 121 being coupled by means of a suitable mount located on the rod and spaced from the end of the rod such that the spring 121 is displaced sideways relative to the corner piece 105. The other end of spring 121 is attached to the lateral edge of the shelf 453 by a suitable mount 123.

Spaced from the spring 113 is another spring 125. The spring 125 is attached at one end to the rod 103, the spring 125 being coupled by means of a suitable mount located on the rod and spaced from the end of the rod such that the spring 125 is displaced sideways relative to the corner piece 107. The other end of spring 125 is attached to the lateral edge of the shelf 453 by a suitable mount 127.

In an alternative embodiment to that shown in figure 18 and figure 19, the securing device 101 does not have springs 121 and 125.

In an alternative embodiment to that shown in figure 18 and figure 19, in addition to the securing device 101 there is one or more strap as shown in figure 10.

With reference to figures 18 to 21, the securing device 101 may be used as follows.

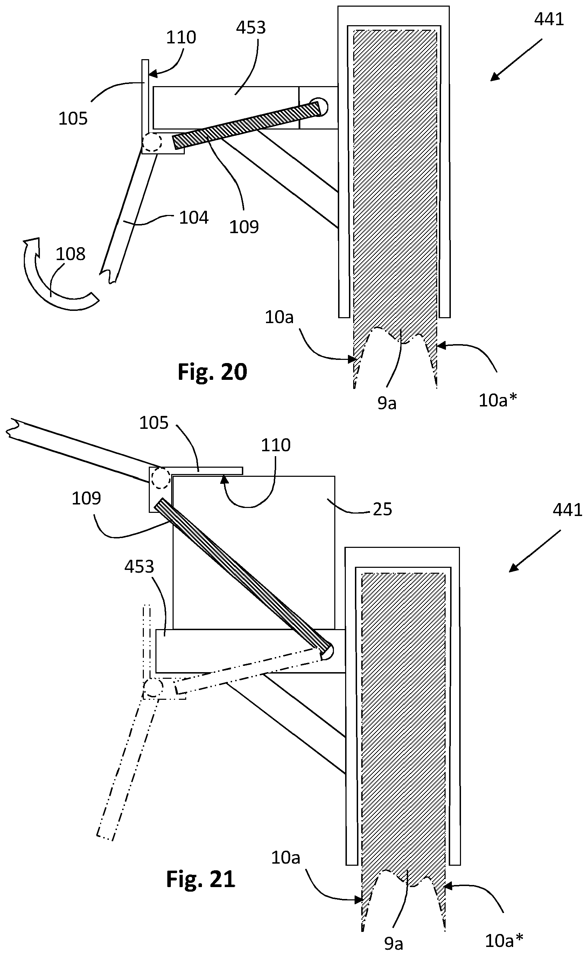

Figure 20 is a view of the device 441 attached to the upper edge of an open-top container door 9a (only a portion of door 9a is shown) in the direction of arrow 458 of figure 18. The device 441 is attached to the upper edge of the door 9a in a way that has been described with reference to figures 11 and 14. As has previously been defined, the door 9a has an interior facing major surface 10a and an opposing exterior facing major surface 10a*.

In the configuration shown in figure 18, and in side view in figure 20, the securing device 101 is in a parked position. The corner piece 105 has an abutment surface 110 that in the parked position is biased against the lateral edge of the shelf 453 by the springs 109, 121. The corner piece 107 is configured in the same way such that in the parked position an abutment surface of the corner piece 107 is biased against the lateral edge of the shelf 453 by springs 113, 125. The abutment surfaces of the corner pieces act to grip the lateral edge of the shelf due to the action of the restoring force of the springs 109, 113, 121 and 125.

The handle 103 can be moved in the direction of arrow 108 as will be explained with reference to figure 20 and 21.

Figure 21 is a side view of the device 441 as shown in figure 20 with a removable door header 25 supported on the shelf 453. In this figure the securing device 101 in the parked position as shown in figure 20 is shown in phantom.

When the device 441 is attached to an upper edge of a door as shown in figure 20, the shelf 453 can be used to support a removable door header 25.

Moving the handle 103 upwards i.e. in the direction of arrow 108 disengages the abutment surfaces from the lateral edge of the shelf. The securing device 101 can be moved to a second position for securing the door header 25 on the shelf 453. This releasably fixes or secures the door header 25 to the shelf 453. The abutment surfaces of the corner pieces act to grip the removable door header 25 against the shelf 453.

As shown in figure 21, the securing device has been moved to a second position wherein the abutment surfaces of the corner pieces are biased against the upper surface of the door header. As shown in the figure, abutment surface 110 is biased against the upper surface of the door header 25 by springs 109 and 121 (not shown in this figure). In this configuration the securing device secures the door header on the shelf 453.

The securing device 101 may be used instead of or in addition to the straps shown in figures 10, 13, 14, 15 and 16.

The shelf 453 may have a shelf extension as shown in figure 17.

Any or all of the springs 109, 113, 121 or 125 may be replaced with other elastically deformable means such as rubber bands.

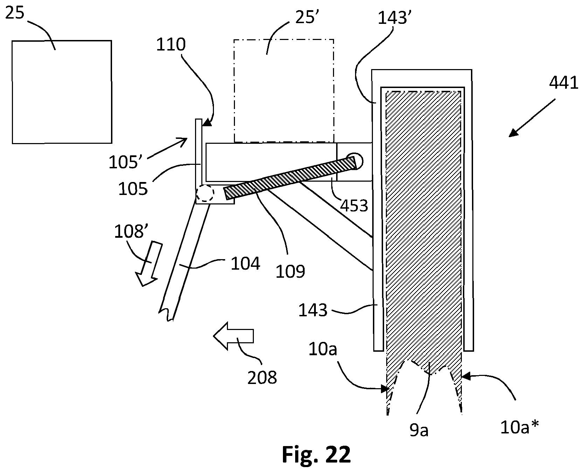

Figure 22 shows an alternative way of using the device 441. In this configuration the removable door header (shown in phantom as 25') is supported on the shelf 453 but instead of the securing device 101 gripping the removable door header against the shelf (as shown in figure 21), upright portions of corner pieces 105, 107 effectively define a first wall of a slot. In the figure, only upright portion 105' of corner piece 105 is shown. The abutment surface 110 of corner piece 105 and the corresponding abutment surface of corner piece 107 face the removable door header (shown in phantom as 25') i.e. the abutment surfaces of the corner pieces are the inner facing surfaces of the first wall of the slot. The second wall of the slot is defined by an upper portion of the wall 143 (shown as region 143' of wall 143 in figure 22). The base of the slot is the upper surface of the shelf 453.

The device 441 is used in this manner as follows to support the removable door header 25. With the device 441 attached to the upper edge of door 9a, the door 9a is closed by moving in the direction of arrow 208.

The handle 104 can be pulled downwardly in the direction of arrow 108', releasing the corner pieces from the lateral edge of the shelf so that the removable door header may be located on the shelf 453 (shown in phantom as 25'). The handle 104 is pulled in the direction 108' a sufficient distance such that the upper edge of upright portion 105' is below the upper surface of the shelf 453, allowing the removable door header to move past the upright portion 105' onto the shelf 453.

The corner pieces can be replaced to the position shown in figure 22 by releasing the handle 104 such that the abutment surfaces of the corner pieces act to grip the lateral edge of the shelf due to the action of the restoring force of the springs 109, 113, 121 and 125 (only spring 109 is shown in figure 22).

With the removable door header in the slot, the container door may be opened and the removable door header is prevented from falling off the shelf by the slot walls.

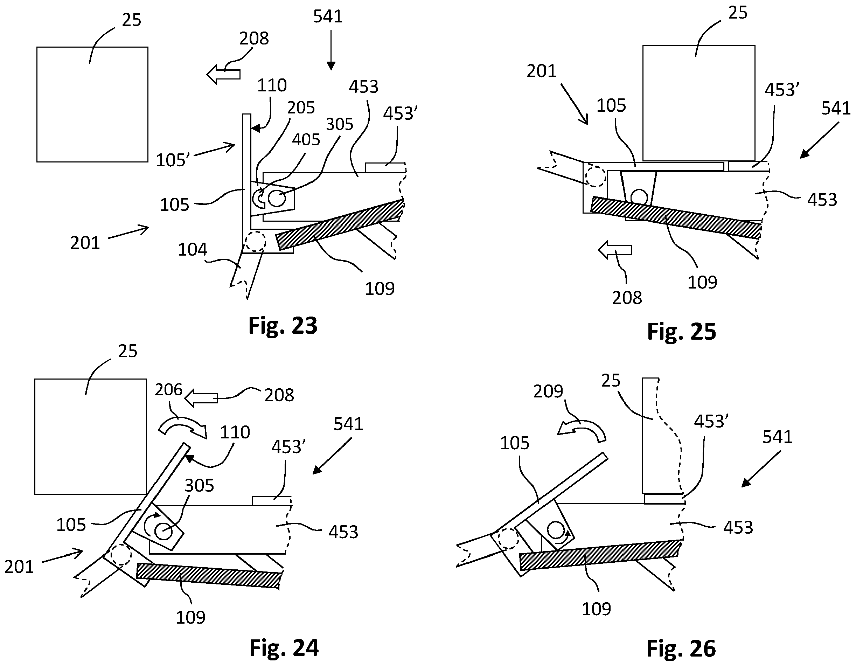

With particular reference to figures 23 to 27, figure 23 shows a portion of an alternative device 541 in accordance with the present invention.

The device 541 is essentially the same as device 441 but the corner pieces are in mechanical communication with the shelf 453 by a hinge member extending from the respective corner piece and being pivotally coupled to a suitable pivot on the shelf.

In figure 23 only corner piece 105 is shown, but corner piece 107 has an equivalent arrangement. The modified securing device is indicated by reference numeral 201.

As figure 23 shows, extending from the corner piece 105 is a hinge member 205 that is pivotally coupled with pivot 305 on the shelf 453 such that the corner piece 105 is rotatable in the direction of arrow 405, as will hereinafter be described in more detail.

In the position shown in figure 23, the corner piece 105 is not able to rotate counter to the direction of arrow 405 (the securing device 201 is parked).

As in the embodiment shown in figure 22, the upper portion 105' of corner piece 105 (and upper portion of corner piece 107) define a first wall of a slot. The second wall of the slot is defined by the upper portion 143' of wall 143.

The device 541 is used as follows. With the device 541 attached to the upper edge of the door 9a (as shown for device 441 in figure 20), the door is closed such that the device moves in the direction of arrow 208 towards the removable door header 25.

Figure 24 shows the device 541 contacting the removable door header 25 part-way through closing the door 9a. As the removable door header contacts the corner piece 105 (and 107), because corner piece 105 is in mechanical communication with the shelf 453 via a first pivot mechanism comprising hinge member 205 and pivot 305, continued movement in the direction of arrow 208 causes the corner piece 105 to rotate about the pivot 305 in the direction of arrow 206. The spring 109 lengthens, being extended from the configuration shown in figure 23 and the device 541 is said to be in a second configuration.

Figure 25 shows the device 541 in a third configuration. Continued movement of the device 541 in the direction of arrow 208 (by closing door 9a) has caused the corner piece 105 to rotate such that the upper portion 105' of the corner piece lies flat against the upper surface of the shelf 453 i.e. the abutment surface 110 is facing the upper surface of the shelf 453. The removable door header 25 is able to move past the corner piece 105 and be supported on the shelf 453. In this embodiment the shelf has a shelf extension 453' to reduce the distance between the upper surface of the shelf 453 and the base of the removable door header due to the thickness of the upper portion of the corner piece 105. The spring 109 is further extended when the device is in the third configuration.

Figure 26 shows the device 541 shortly after the removable door header has been supported on the shelf 453 (via shelf extension 453').

The corner pieces 105, 107 rotate back to the initial configuration shown in figure 23 due to the biasing force of the springs 109, 113, 121 and 125 (only corner piece 105 is shown). The corner piece 105 rotates about the respective pivot in the direction of arrow 209 back to the configuration shown in figure 23.

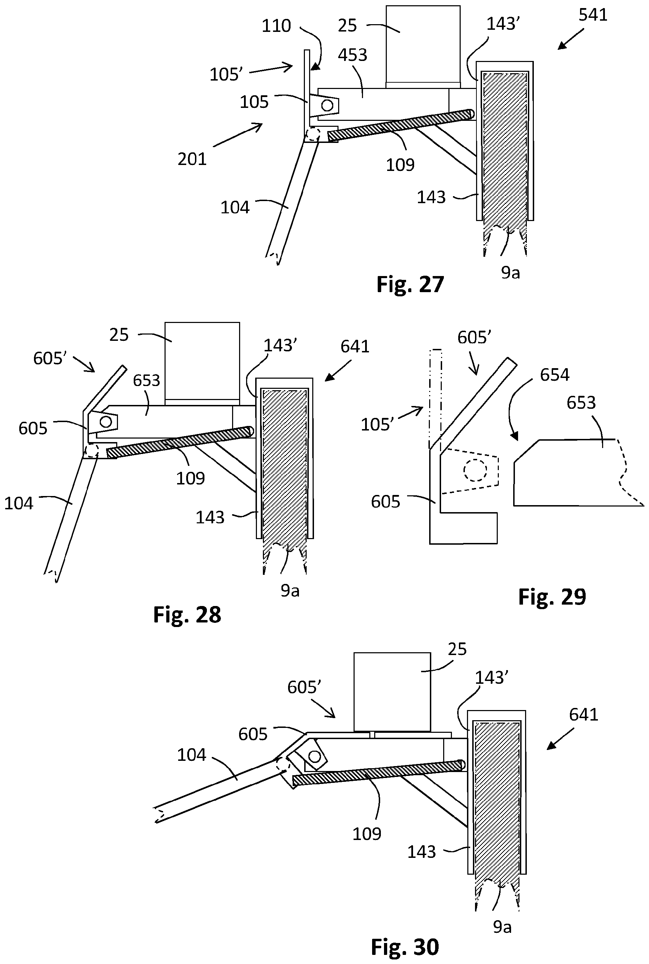

Figure 27 shows the removable door header 25 supported on the shelf 453 of the device 541. The corner piece 105 (and 107) is in the initial configuration (parked position) shown in figure 23. When the removable door header is to be removed from the shelf, the handle 104 is moved upwards such that the device 541 is placed in the configuration shown in figure 25.

The removable door header 25 is secured on the shelf 453 because as the door is opened, the removable door header is unable to slide off the shelf 453 due to the contact with the abutments surfaces of the corner pieces or the upper portion 143' of the wall 143.

The corner pieces may extend upwards a sufficient amount to ensure the removable door header is secured on the shelf as the door is opened. The abutment surfaces may be configured to grip the sides of the removable door header against the other side of the slot. Instead of the upper portion 143' of the wall 143 being used as one wall of the slot, the other side of the slot may be a separate element, for example blocks 83, 84 as shown in figure 16.

Figure 28 shows a side view of another device 641 in accordance with the present invention. The device 641 is essentially the same as the device 541 except the device 641 has a shelf 643 that has a chamfered upper edge/lateral edge, as shown in more detail in figure 29. Also the device 641 has modified corner pieces 605 and 607 where each respective upper portion thereof when in the initial "parked position" is angled towards the shelf 643 (and not substantially perpendicular thereto as shown for the devices 441 and 541). In figure 28 only angled upper portion 605' of corner piece 605 is shown.

Figure 29 shows an exploded portion of part of the device 641 to illustrate the modified shelf 653 and the modified corner pieces 605 (and 607, not shown). The upper edge 654 (or second lateral edge, with reference to figure 12 for example) of the shelf 653 is chamfered. The corner piece 605 has an angled upper portion 605' (and not an upper portion such that when the corner piece is in the parked position, the upper portion extends substantially perpendicular to the shelf). An upper portion 105' as shown in the device 441 and 541 is shown in phantom to illustrate the difference of the angled upper portion 605'.

Figure 30 shows the device 641 in the configuration shown for device 541 in figure 25. The corner piece 605 has rotated fully such that the angled upper portion 605' lays flat against the upper surface of the shelf 653. Since the shelf 653 has a chamfered edge, the handle 104 does not rise as high making it easier to position the removable door header onto the shelf 653. In the configuration shown in figure 30, the spring 109 has extended and once the base of the removable door header 25 clears the angled upper portion 605', the corner piece 605 will rotate to the initial parked position (as shown in figure 28) due to the restoring force of the spring 109 (and springs 113,121 and 125, not shown).

As is readily apparent from the devices shown in figures 12 to 30, when the removable door header is supported on the shelf, because the shelf extends away from the container door, the removable door header is in a different plane to the plane of the door.

A device according to the present invention is used as follows to remove a removable door header from an open-top container.

With reference to figure 1 and 11, the doors 9a, 9b of the open-top container are opened. Door 9a is opened sufficiently such that the device may be attached to the upper edge of the door 9a, for example as shown in figure 11.

With door 9b open, door 9a is closed such that the support means, for example the shelf, is below the removable door header. In this configuration, the door header can be secured on or to the support means by securing means, for example the straps shown in figure 13 and/or the securing device 101 shown in figure 19.

With reference to figure 5, the pin 37 is removed such that the removable door header may be swung outwardly with securing pin 31 acting as a pivot.

With securing pin 37 removed, and with the removable door header secured to the support means, for example the shelf, of the device, the door 9a is opened. Since the device is attached to the door (as shown in figure 9a) opening door causes the removable door header to rotate about the securing pin 31. The removable door header is continually supported by the support means of the device as the door 9a opens and the removable door header rotates about the securing pin 31.

To replace the door header, the above steps are reversed. That is, door 9a is closed, the securing pin 37 is replaced and the securing means securing the removable door header to the support means of the device are released. Thereafter the door 9a can be opened and the device removed therefrom.

A device according to the present invention allows for the safe removal and replacement of a removable door header from open-top containers. The device may be incorporated into the design of open-top containers such that the device is an integral component of the container. Alternatively the device may be a stand-alone piece of equipment.

## Claims

1. A device (241, 541, 641) for supporting a removable door header (25), the removable door header being part of a container, preferably an open-top container (1), the device comprising attachment means (42, 142) for attaching the device to a door (9a, 9b) of the container and support means (53, 453, 653) for supporting the removable door header when the device is attached to the door, wherein the support means comprises slot means for defining a slot into which the removable door header fits.

2. A device according to claim 1, wherein the slot means comprises one or more elements (81, 82, 83, 84, 105, 107, 105, 107, 605, 607) extending upwards from the support means to define at least a portion of the slot and/or wherein the slot is configured to prevent the door header from toppling over when the removable door header is located in the slot.

3. A device according to claim 1 or claim 2, wherein the attachment means is configured to slot onto the door, preferably wherein the attachment means is configured to slot onto the upper edge of the door.

4. A device according to any of the preceding claims, wherein the attachment means comprises a first wall (43, 143) spaced apart from a second wall (45, 145), the first wall configured to face an inner facing surface (10a) of the door and the second wall configured to face an outer facing surface of the door.

5. A device according to claim 4, wherein the first wall (43, 143) is connected to the second wall (45, 145) by an upper member (47, 147), preferably wherein the first wall, the second wall and the upper member are configured to have a U-shape for attaching to the door.

6. A device according to claim 5, wherein the first wall, the second wall and the upper member are separate components that have been connected together.

7. A device according to any of the preceding claims, wherein the support means is perpendicular to the attachment means and/or wherein the support means is configured to extend beyond the external perimeter of the door.

8. A device according to any of the preceding claims, comprising securing means for securing the removable door header on or against the support means, preferably wherein the securing means comprises one or more straps (63, 65, 67, 69) and/or wherein the securing means (101) comprises one or more elastically deformable means (109, 113, 121, 125).

9. A device according to claim 8, wherein the securing means comprises one or more elastically deformable means and at least one of the one or more deformable means is in mechanical communication at one end with the support means and at the other end with abutment means (105) for securing the removable door header on or against the support means, preferably wherein the abutment means comprises at least one abutment surface (110).

10. A device according to any of the claim 8 or claim 9, wherein the securing means comprises one or more elastically deformable means and the elastically deformable means comprises at least one spring (109, 113, 121, 125) and/or at least one band of elastic material, preferably rubber.

11. A device according to any of the claims 8 to 10, wherein at least a portion of the securing means is mounted on the support means and/or the attachment means.

12. A device according to any of the preceding claims, wherein the support means comprises a shelf (53, 453, 653), preferably wherein the shelf is extendible, more preferably wherein the shelf comprises a slidable extension or a foldable extension for extending the length of the shelf.

13. A device according to any of the preceding claims, wherein the device is removably attachable to the door.

14. A method of removing a removable door header from a container, the method comprising the steps: attaching a device according to any of the claims 1 to 13 to a door of the container such that the support means is below the removable door header; removing a pin (31, 37) securing the removable door header to the container; and opening the door such that the removable door header is supported on the support means as the door opens, preferably wherein both pins securing the removable door header to the container are removed.

15. Use of a door of an open-top container and a device according to any of the claims 1 to 13 for removing or replacing a removable door header from the open-top container.

## Patentansprüche

1. Vorrichtung (241, 541, 641) zum Unterstützen eines entfernbaren oberen Türquerträgers (25), wobei der entfernbare obere Türquerträger Teil eines Containers, vorzugsweise eines oben offenen Containers (1) ist, wobei die Vorrichtung eine Befestigungseinrichtung (42, 142) zum Befestigen der Vorrichtung an einer Tür (9a, 9b) des Containers und eine Unterstützungseinrichtung (53, 453, 653) zum Unterstützen des entfernbaren oberen Türquerträgers umfasst, wenn die Vorrichtung an der Tür befestigt ist, wobei die Unterstützungseinrichtung eine Aussparungseinrichtung zum Definieren einer Aussparung umfasst, in die der entfernbare obere Türquerträger hineinpasst.

2. Vorrichtung nach Anspruch 1, wobei die Aussparungseinrichtung ein oder mehrere Elemente (81, 82, 83, 84, 105, 107, 105, 107, 605, 607) umfasst, die sich von der Unterstützungseinrichtung nach oben erstrecken, um mindestens einen Abschnitt der Aussparung zu definieren, und/oder wobei die Aussparung dafür konfiguriert ist, den oberen Türquerträger daran zu hindern, umzukippen, wenn der entfernbare obere Türquerträger in der Aussparung angeordnet ist.

3. Vorrichtung nach Anspruch 1 oder Anspruch 2, wobei die Befestigungseinrichtung dafür konfiguriert ist, auf die Tür aufgesteckt zu werden, wobei die Befestigungseinrichtung vorzugsweise dafür konfiguriert ist, auf die obere Kante der Tür aufgesteckt zu werden.

4. Vorrichtung nach einem der vorhergehenden Ansprüche, wobei die Befestigungseinrichtung eine erste Wand (43, 143) umfasst, die von einer zweiten Wand (45, 145) beabstandet ist, wobei die erste Wand dafür konfiguriert ist, einer inneren gegenüberliegenden Oberfläche (10a) der Tür gegenüberzuliegen, und die zweite Wand dafür konfiguriert ist, einer äußeren gegenüberliegenden Oberfläche der Tür gegenüberzuliegen.

5. Vorrichtung nach Anspruch 4, wobei die erste Wand (43, 143) durch ein oberes Element (47, 147) mit der zweiten Wand (45, 145) verbunden ist, wobei vorzugsweise die erste Wand, die zweite Wand und das obere Element so konfiguriert sind, dass sie für die Befestigung an der Tür U-förmig ausgebildet sind.

6. Vorrichtung nach Anspruch 5, wobei die erste Wand, die zweite Wand und das obere Element getrennte Bauteile sind, die miteinander verbunden worden sind.

7. Vorrichtung nach einem der vorhergehenden Ansprüche, wobei die Unterstützungseinrichtung senkrecht zu der Befestigungseinrichtung ist und/oder wobei die Unterstützungseinrichtung so konfiguriert ist, dass sie sich über den äußeren Umfang der Tür hinaus erstreckt.

8. Vorrichtung nach einem der vorhergehenden Ansprüche, die eine Sicherungseinrichtung zum Sichern des entfernbaren oberen Türquerträgers an oder gegen die Unterstützungseinrichtung umfasst, wobei die Sicherungseinrichtung vorzugsweise ein oder mehrere Riemen (63, 65, 67, 69) umfasst und/oder wobei die Sicherungseinrichtung (101) ein oder mehrere elastisch verformbare Mittel (109, 113, 121, 125) umfasst.

9. Vorrichtung nach Anspruch 8, wobei die Sicherungseinrichtung ein oder mehrere elastisch verformbare Mittel umfasst und mindestens eines des einen oder der mehreren verformbaren Mittel an dem einen Ende in mechanischer Verbindung mit der Unterstützungseinrichtung und an dem anderen Ende mit einer Widerlagereinrichtung (105) zum Sichern des entfernbaren oberen Türquerträgers an oder gegen die Unterstützungseinrichtung steht, wobei die Widerlagereinrichtung vorzugsweise mindestens eine Widerlageroberfläche (110) umfasst.

10. Vorrichtung nach Anspruch 8 oder Anspruch 9, wobei die Sicherungseinrichtung ein oder mehrere elastisch verformbare Mittel umfasst und das elastisch verformbare Mittel mindestens eine Feder (109, 113, 121, 125) und/oder mindestens ein Band aus elastischem Material, vorzugsweise Gummi, umfasst.

11. Vorrichtung nach einem der Ansprüche 8 bis 10, wobei mindestens ein Abschnitt der Befestigungseinrichtung auf der Unterstützungseinrichtung und/oder der Anbringungseinrichtung montiert ist.

12. Vorrichtung nach einem der vorhergehenden Ansprüche, wobei die Unterstützungseinrichtung eine Ablagefläche (53, 453, 653) umfasst, wobei die Ablagefläche vorzugsweise verlängerbar ist, wobei noch bevorzugter die Ablagefläche eine gleitfähige Verlängerung oder eine faltbare Verlängerung zum Verlängern der Länge der Ablagefläche umfasst.

13. Vorrichtung nach einem der vorhergehenden Ansprüche, wobei die Vorrichtung entfernbar an der Tür befestigt ist.

14. Verfahren zum Entfernen eines entfernbaren oberen Türquerträgers von dem Container, wobei das Verfahren die Schritte umfasst: Befestigen einer Vorrichtung nach einem der Ansprüche 1 bis 13 an einer Tür des Containers, so dass die Unterstützungseinrichtung unterhalb des entfernbaren oberen Türquerträgers ist; Entfernen eines Stifts (31, 37), der den entfernbaren oberen Türquerträger an dem Container sichert; und Öffnen der Tür, so dass der entfernbare obere Türquerträger auf der Unterstützungseinrichtung unterstützt wird, wenn sich die Tür öffnet, wobei vorzugsweise beide Stifte, die den entfernbaren oberen Türquerträger an dem Container sichern, entfernt werden.

15. Verwendung einer Tür eines oben offenen Containers und einer Vorrichtung nach einem der Ansprüche 1 bis 13 für das Entfernen oder Ersetzen eines entfernbaren oberen Türquerträgers von dem oben offenen Container.

## Revendications

1. Dispositif (241, 541, 641) pour supporter un linteau de porte amovible (25), le linteau de porte amovible faisant partie d'un conteneur, de préférence un conteneur à toit ouvert (1), le dispositif comprenant un moyen de fixation (42, 142) pour fixer le dispositif à une porte (9a, 9b) du conteneur et un moyen de support (53, 453, 653) pour supporter le linteau de porte amovible lorsque le dispositif est fixé à la porte, dans lequel le moyen de support comprend un moyen de fente pour définir une fente dans laquelle le linteau de porte amovible se monte.

2. Dispositif selon la revendication 1, dans lequel le moyen de fente comprend un ou plusieurs éléments (81, 82, 83, 84, 105, 107, 105, 107, 605, 607) s'étendant vers le haut à partir du moyen de support pour définir au moins une partie de la fente et/ou dans lequel la fente est configurée pour empêcher le linteau de porte de basculer lorsque le linteau de porte amovible est positionné dans la fente.

3. Dispositif selon la revendication 1 ou la revendication 2, dans lequel le moyen de fixation est configuré pour s'emboîter dans la porte, de préférence dans lequel le moyen de fixation est configuré pour s'emboîter dans le bord supérieur de la porte.

4. Dispositif selon l'une quelconque des revendications précédentes, dans lequel le moyen de fixation comprend une première paroi (43, 143) espacée d'une seconde paroi (45, 145), la première paroi étant configurée pour faire face à une surface en vis-à-vis interne (10a) de la porte et la seconde paroi étant configurée pour faire face à une surface en vis-à-vis externe de la porte.

5. Dispositif selon la revendication 4, dans lequel la première paroi (43, 143) est raccordée à la seconde paroi (45, 145) par un élément supérieur (47, 147), de préférence dans lequel la première paroi, la seconde paroi et l'élément supérieur sont configurés pour avoir une forme de U pour se fixer à la porte.

6. Dispositif selon la revendication 5, dans lequel la première paroi, la seconde paroi et l'élément supérieur sont des composants séparés qui ont été raccordés ensemble.

7. Dispositif selon l'une quelconque des revendications précédentes, dans lequel le moyen de support est perpendiculaire au moyen de fixation et/ou dans lequel le moyen de support est configuré pour s'étendre au-delà du périmètre externe de la porte.

8. Dispositif selon l'une quelconque des revendications précédentes, comprenant un moyen de fixation pour fixer le linteau de porte amovible sur ou contre le moyen de support, de préférence dans lequel le moyen de fixation comprend une ou plusieurs sangles (63, 65, 67, 69) et/ou dans lequel le moyen de fixation (101) comprend un ou plusieurs moyens élastiquement déformables (109, 113, 121, 125).

9. Dispositif selon la revendication 8, dans lequel le moyen de fixation comprend un ou plusieurs moyens élastiquement déformables et au moins l'un des un ou plusieurs moyens déformables est en communication mécanique au niveau d'une extrémité avec le moyen de support et au niveau de l'autre extrémité avec le moyen de butée (105) pour fixer le linteau de porte amovible sur ou contre le moyen de support, de préférence dans lequel le moyen de butée comprend au moins une surface de butée (110).

10. Dispositif selon l'une quelconque des revendications 8 ou 9, dans lequel le moyen de fixation comprend un ou plusieurs moyens élastiquement déformables, et le moyen élastiquement déformable comprend au moins un ressort (109, 113, 121, 125) et/ou au moins une bande de matériau élastique, de préférence du caoutchouc.

11. Dispositif selon l'une quelconque des revendications 8 à 10, dans lequel au moins une partie du moyen de fixation est montée sur le moyen de support et/ou sur le moyen de fixation.

12. Dispositif selon l'une quelconque des revendications précédentes, dans lequel le moyen de support comprend une étagère (53, 453, 653), de préférence dans lequel l'étagère est extensible, encore de préférence dans lequel l'étagère comprend une extension coulissante ou une extension pliable pour prolonger la longueur de l'étagère.

13. Dispositif selon l'une quelconque des revendications précédentes, dans lequel le dispositif peut être fixé de manière amovible à la porte.

14. Procédé pour retirer un linteau de porte amovible d'un conteneur, le procédé comprenant les étapes consistant à : fixer un dispositif selon l'une quelconque des revendications 1 à 13 à une porte du conteneur de sorte que le moyen de support est au-dessous du linteau de porte amovible ; retirer une broche (31, 37) fixant le linteau de porte amovible au conteneur ; et ouvrir la porte de sorte que le linteau de porte amovible est supporté sur le moyen de support lorsque la porte s'ouvre, de préférence dans lequel les deux broches fixant le linteau de porte amovible au conteneur, sont retirées.

15. Utilisation d'une porte d'un conteneur à toit ouvert et d'un dispositif selon l'une quelconque des revendications 1 à 13, pour retirer ou remplacer un linteau de porte amovible d'un conteneur à toit ouvert.
